# EUROPEAN PATENT APPLICATION

(11) **EP 2 910 882 A1**
(43) Date of publication of application: **26.08.2015**
(21) Application number: 14461607.5
(22) Date of filing: 29.12.2014
(51) Int. Cl.: F26B 23/00, D06F 58/20

(54) **Drying machine for drying of wet objects with circulation of drying medium and method for protecting heat pump of drying machine for drying of wet objects against overheating**

(30) Priority: 03.02.2014 PL 40706514; 14.03.2014 PL 40752714; 23.12.2014 PL 41062914; 23.12.2014 PL 41063114
(71) Applicant: Kordecka, Wieslawa, 55-120 Oborniki Slaskie (PL)
(72) Inventor: Kordecki, Piotr, 55-120 Oborniki Slaskie (PL); Kordecki, Zdzislaw, 55-120 Oborniki Slaskie (PL)
(74) Representative: Hudy, Ludwik

(57) **Abstract**

In a dryer or a drying machine with an incompletely closed circulation or a closed circulation of a drying medium or agent for drying wet objects or articles comprising a drying chamber with the wet objects or articles placed therein, a fan forcing the circulation of the drying medium and a heat pump with an evaporator and a condenser that comprises a chamber connected via a flow line with the drying chamber, in the incompletely closed circulation or the closed circulation of the drying medium there is a heat exchanger (80) with a heating chamber (85) to which through a supply connection (74) outside air or another cooling agent is supplied, cooling the drying medium flowing through a cooling chamber (81) in which the circulation of outside air or another cooling agent is forced by an additional fan or pump (76).

## Description

The object of the invention is a drying machine or a dryer for drying of wet objects or articles, starting with agricultural or farm products through textile products up to minerals and bulk products as well as ceramic products, especially with a closed circulation or an incompletely closed circulation of a drying medium or agent, according to the preamble of claim 1 and a method for protecting against overheating a heat pump of a drying machine for drying of wet objects or articles according to the preamble of claim 6.

When drying wet objects or articles in dryers, both, with the incompletely closed circulation and the closed circulation of the drying medium, the drying medium or agent should be supplied to a drying chamber at a proper temperature and in a state distant as much from the liquid-steam transformation curve that water present in the wet articles evaporates in the drying chamber, afterwards the drying agent should be removed from the drying chamber.

From the Polish patent description PL 176057 a tumble laundry dryer is known which comprises a rotating drum constituting a drying chamber made of solid metal sheet and externally placed on rolling elements. In an upper part of a rear wall constituting a drum closure there is an inlet of hot air, whereas, a side of a front wall of a drum mantle is closed with a bottom plug with a redrawing embedded on a sliding ring. The air outlet channel goes through the dry air inlet forming a heat exchanger.

From the U.S. patent description no. US 6745495 a dryer tumble for drying articles is known that comprises a drum having a cavity configured to hold articles to be dried, a first motor drivingly coupled to the drum to rotate the drum, a heat source in flow communication with the cavity and a variable speed motor coupled to a blower positioned to deliver heated air from the heat source to the cavity.

From the U.S. patent description no. US 4549362 an industrial dryer for drying fabrics is known which is provided with an air recirculating-mixing system whereby the device comprises a control unit that controls the system of valves allowing recirculation of warm air of a various percentage content inside the drum.

From the European patent description no. EP 2260138 a dryer for clothes is known. The dryer has a rotatably embedded dryer drum to receive clothes to be dried with a driving motor for rotatable driving the dryer drum wherein the driving motor is a single-phase or multi-phase electric motor and wherein to control the electric motor a frequency converter has been anticipated that comprises a power controller for the single-phase or multi-phase electric motor and a measuring device to measure phase currents and/or phase voltages.

Besides, a dryer for clothes is used having a heat pump comprising a condenser and an evaporator, a drying chamber connected via a dry air duct with the condenser of the heat pump and via a wet air duct with the evaporator of the heat pump, as well as a fan that forces circulation of process air. A process air, forced by the fan, circulates in a closed system. The dried and heated process air in the heat pump condenser is conducted to the drying chamber where it is moistened. The moistened process air is conducted from the drying chamber to the heat pump evaporator in which it is cooled down and water is dripped from it. The warm air dried in the heat pump evaporator reflows to the heat pump condenser.

From the publication JP 2011250849 A of the patent application description a cloth drying apparatus is known, in which a coolant is circulated through a compressor, a condenser, pressure reduction means and an evaporator. There is an auxiliary heat exchanger and a multi-way valve located between the condenser and the evaporator in an airflow channel or duct of the drying air. By switching over the multi-way valve, the auxiliary heat exchanger operates at one drying stage as the evaporator, and at the next drying stage, it operates as the condenser to reduce the temperature and to dry the drying gas.

In known dryers in a closed system or an incompletely closed system where in a drying process heat pumps are used to dry and heat a drying agent, an energy of the drying system always rises by an electric energy that supplies a motor of a heat pump compressor, transformed into thermal energy in the system. If the system gets closed or almost completely closed and insulated, then the overheating effect of the heat pump will appear in relation to the constant rise of the energy of the whole system. If such effect is not observed, then it results from heat losses on flow lines of the drying agent or on a dryer housing.

The objective of this invention is to create a dryer or drying machine, especially with a closed circulation or an incompletely closed circulation of a drying medium for drying wet objects or articles, starting with agricultural or farm products through textile products up to minerals and bulk products as well as ceramic products as well as a protection method against overheating of a heat pump in the dryer for drying the wet articles.

In the case of the dryer according to the invention, this objective has been achieved by features of claim 1, and in the case of the method the objective has been achieved by features of claim 6.

According to an idea of this invention, in a dryer or a drying machine with an incompletely closed circulation or a closed circulation of a drying medium or agent for drying wet objects or articles comprising a drying chamber with the wet objects or articles located therein, a fan forcing the circulation of the drying medium or agent and a heat pump with an evaporator and a condenser comprising a chamber connected via a flow line with the drying chamber, in the incompletely closed circulation or the closed circulation of the drying medium or agent there is a heat exchanger with a heating chamber to which, through supply connection pipes, air from an outside or another cooling agent to cool the drying agent is supplied, flowing through a cooling chamber of the heat exchanger in which the circulation of outside air or another cooling agent is forced by an additional fan or a pump.

An inlet connection pipe of the drying medium or agent of the heat exchanger can be connected with an outlet of the heat pump evaporator chamber, and an outlet connection pipe of the drying medium or agent of the heat exchanger can be connected with an inlet of the heat pump condenser chamber.

In another embodiment, the inlet connection pipe of the drying medium or agent of the heat exchanger can be connected with an outlet of the drying chamber, and the outlet connection pipe of the drying medium or agent of the heat exchanger can be connected with an inlet of the heat pump evaporator chamber.

In an alternative embodiment in a closed circulation of a drying medium or agent or in an incompletely closed circulation there is an additional heat exchanger with a cooling chamber and a heating chamber drawing thermal energy from the cooling chamber whose inlet is connected with an outlet of a drying chamber, and an outlet is connected with a supply connection pipe of a evaporator chamber of a heat pump whereby an outlet connection pipe of the evaporator chamber is connected with the heating chamber of the heat exchanger whose outlet is connected with an inlet connection pipe of the drying medium or agent of the heat exchanger and an outlet connection pipe of the drying medium or agent of the heat exchanger is connected with an inlet of the heat exchanger condenser chamber.

In alternative embodiments the drying chamber can be a rotatable drying chamber or a belt.

According to a further idea of the present invention, in a protection method of a heat pump against overheating in a drying machine or dryer for drying wet objects or articles comprising a drying chamber, a fan and a heat pump inter-connected via flow lines of the drying medium or agent, creating with the drying chamber, the fan forcing the circulation of the drying medium or agent and the heat pump comprising an evaporator with a chamber and a condenser with a chamber, an incompletely closed circulation or a closed circulation of the drying medium or agent, the drying agent is cooled in a heat exchanger with a heating chamber to which, via a supply connection, air or water or another cooling agent is supplied, which cools the drying medium or agent flowing through the cooling chamber of the heat exchanger in which the circulation of outside air or another cooling agent is forced by an additional fan or a pump.

The flow of the cooling agent through the heating chamber can be adjusted using a motor that drives the additional fan or pump whose operation is controlled by a power supply-control system to which signals about the heating state of the drying agent are transmitted from a temperature sensor.

The flow of the cooling agent through the heating chamber can be constant and the motor driving the additional fan or pump can operate with a constant speed. Preferably, thermal energy that is removed using the heat exchanger is not greater than electric energy delivered to the electric motor of the compressor decreased by the energy of heat losses to an ambient on flow lines of the drying medium or agent, working medium or agent and on a dryer housing.

The method and the system according to the invention solve an overheating problem of a heat pump through additional cooling of process air and not like until now, the cooling of a working agent of the heat pump on a hot side of the heat pump or the drying agent behind a condenser. In the solution presented, the working agent in the heat pump evaporator receives less energy than it gives up in the heat pump condenser. Thus the enthalpy of the working agent leaving the heat pump evaporator of the present solution has a lower value than that of the working agent leaving the heat pump evaporator in known state-of-the-art systems by the value of enthalpy received in the heat exchanger.

The drying machine according to the invention allows to conduct or lead a process in which the enthalpy of a stream of the drying medium or a process medium or air flowing out from the drying chamber is equal to that of the stream of the drying medium or the process medium or air flowing out from the heat pump condenser which in turn is equal to the sum of the enthalpy of the working agent flowing out from the evaporator and the electric energy supplying the heat pump compressor. In the solution according to the invention a stream of energy delivered by the heat pump gets reduced, on the other hand, the heat pump efficiency increases so that the system is characterized by a low energy consumption.

The invention has been presented in the embodiment in drawing in which Fig. 1 schematically shows a dryer or a drying machine with a circulation of a drying medium or agent for drying wet objects or articles with a heat exchanger, cooling the drying medium or agent with outside air and located between an evaporator and a condenser, Fig. 2 schematically shows a dryer or a drying machine with the circulation of the drying medium or agent for drying wet object or articles with the heat exchanger, cooling the drying medium or agent using outside air and located between a drying chamber and the evaporator, Fig. 3 schematically shows a dryer or a drying machine with the circulation of the drying medium or agent for drying wet objects or articles with a recuperator whose cooling duct and heating duct are positioned in flow lines or ducts connected to the evaporator and with a heat exchanger that cools the drying medium or agent using outside air, Figs. 4 and 5 show a counterflow recuperator with ducts of the drying medium or agent of a cooling chamber and a heating chamber which are positioned in parallel at least over specific sections, Fig. 6 shows a dryer or drying machine with a rotatable drying chamber, and Fig. 7 show a dryer or drying machine with the rotatable drying chamber in another embodiment.

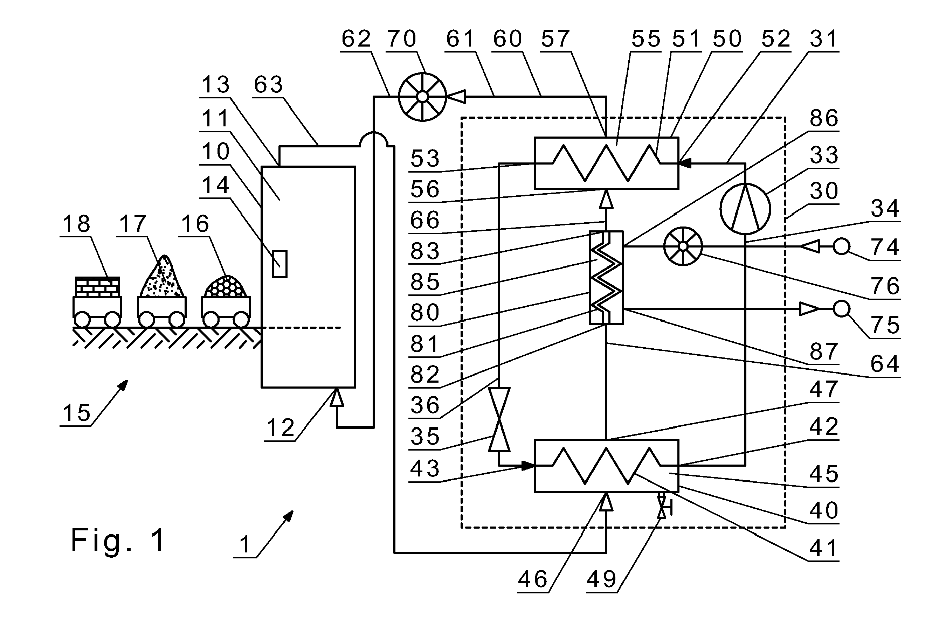

A dryer or a drying machine 1 with a closed circulation 60 or an incompletely closed circulation of a drying medium or agent for drying wet objects 15 or articles, shown schematically in Fig. 1, comprises a drying unit 10, having a drying chamber 11, a heat pump 30 with a circulation 31 of a working medium or agent, a fan 70 located in circulation lines of the drying medium or agent, being the incompletely closed circulation when a valve or a gate valve 14 is set in a position in which to the drying chamber 11 air or a drying agent is supplied from the outside, for example, through air leaks or an open valve, or being the closed circulation 60 of the drying agent when the system is hermetic, and neither air nor drying agent is supplied from the outside.

According to the invention, the drying medium can be air or inert gas, for example, carbon dioxide, nitrogen, combustion gas or their mixtures. The flow direction of the drying medium in ducts or flow lines is marked in all figures by a white arrow.

Connected with the drying chamber 11 of the drying unit 10 shown in Fig. 1 in which wet articles 15 are placed, exemplarily fruits, vegetables, agricultural or farm products 16, textile products, minerals, bulk products 17, ceramic products 18, through a supply inlet 12 using a second section of a duct or a supply flow line 62 of the circulation 60 of the drying medium is the fan 70. Connected with the drying chamber 11 through an outlet 13, using a third section of the duct or an outlet flow line 63 of the circulation 60 of the drying medium is a supply connection pipe 46 of a chamber 45 of an evaporator 40 with a cooling coil 41. The chamber 45 of the evaporator 40 has an outlet connection pipe 47 with which, using a fourth section of the duct or a flow line 64 of the circulation of the drying medium, an inlet connection pipe 82 of a cooling chamber 81 of a heat exchanger 80 provided with a heating chamber 85 is connected.

Besides, the chamber 45 of the evaporator 40 has a valve 49 allowing to take off water collecting in the chamber 45 of the evaporator 40 and dropped it out from a stream of a hot wet drying agent. Supplied to the heating chamber 85 using a supply connection pipe 86 is outside air or another cooling medium or agent that is taken off using an outlet connection pipe 87, and whose flow in an outside circulation between an air supplying connection 74 and an air outlet connection 75 is forced using an additional fan or pump 76.

Located in the circulation 31 of the working agent of the heat pump 30 in a flow line 34 of the working agent, connecting an outlet connection pipe 42 of the cooling coil 41 with a supply connection pipe 52 of a heating coil 51 of a condenser 50 is a compressor 33, where the working agent is compressed, which involves an abrupt rise of its temperature, being the consequence of the delivery of energy to the circulation system of the working agent through the supply of the heat pump with electric energy. Besides, located in the circulation 31 of the working agent of the heat pump 30 in a flow line 36 of the working agent connecting an outlet connection pipe 53 of the heating coil 51 of the condenser 50 with an inlet connection pipe 43 of the cooling coil 41 of the evaporator 40 is an expansion valve 35 or a capillary tube or an expansion turbine in which the working agent is throttled from the condensation pressure to the pressure that is in the evaporator 40. According to the invention, the working medium or agent can be freon, ammonia, carbon dioxide or another thermodynamic agent that has properties allowing it to boil at a low temperature, exemplarily at 0°C. The circulation direction of the working agent in ducts or flow lines has been marked in all figures by a black arrow.

The drying medium flowing through a chamber 81 is cooled, and afterwards supplied through an outlet connection pipe 83 of a heat exchanger 80 and a final section of the duct or a flow line 66 to an inlet 56 of a chamber 55 of the condenser 50 wherefrom, after heating by thermal energy from the working agent present in the heating coil 51, is directed through an outlet 57 and a first section of the duct or a flow line 61 to the fan 70 forcing the flow of the drying medium in the closed thermodynamic circulation or the incompletely closed circulation.

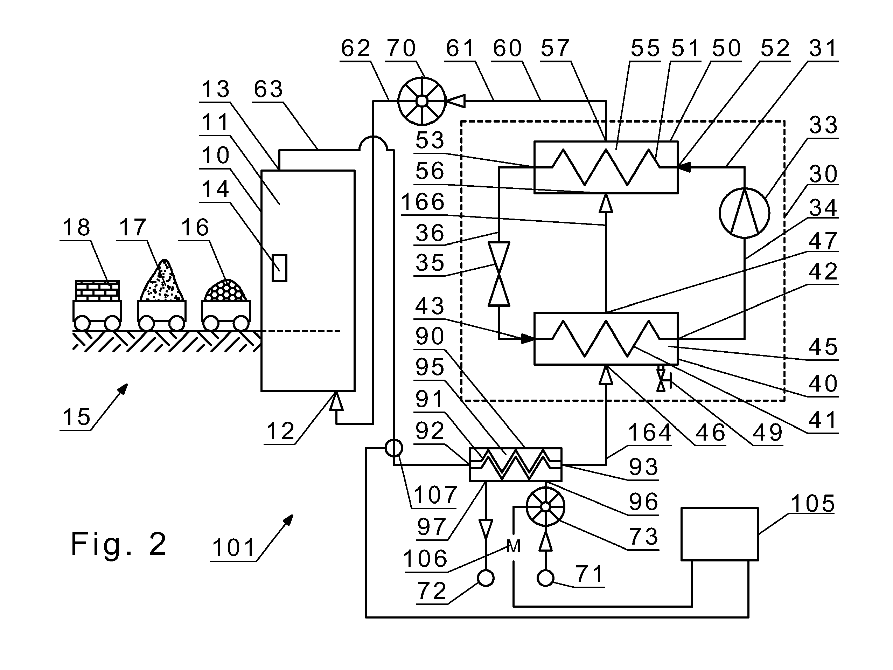

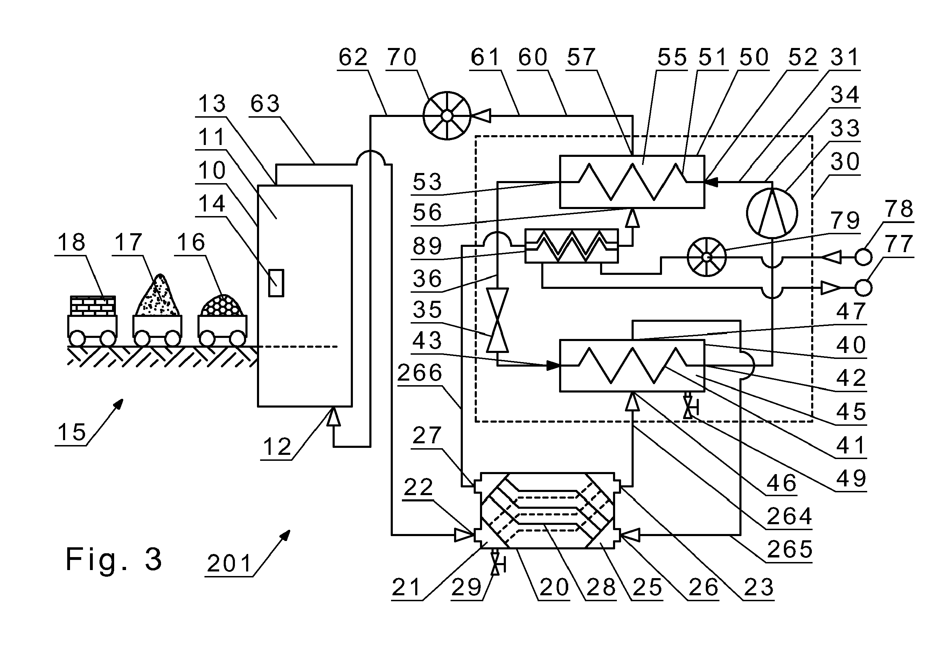

A dryer 101 with the circulation 60 of the drying medium for drying wet articles shown in Fig. 2 is constructed like the dryer 1 presented schematically in Fig. 1. The difference between both embodiments consists in a heat exchanger 90 from Fig. 2 playing the same role as the heat exchanger 80 from Fig. 1 and cooling the drying agent with outside air or another cooling agent being located between the drying chamber 11 and the chamber 45 of the evaporator 40 whose outlet 47 is connected directly to the inlet 56 of the chamber 55 of the condenser 50 using a final section of the duct or a flow line 166. In this solution, the drying chamber 11 is connected using the third section of the duct or the flow line 63 with an inlet connection pipe 92 of a cooling chamber 91 of the heat exchanger 90 having a heating chamber 95. The cooling chamber 91 of the heat exchanger 90 has an outlet connection line 93 with which, using a fourth section of the duct or a flow line 164 of an outside heat circulation of the heat pump 30, which makes part of the circulation 60 of the drying medium, the inlet connection 46 of the chamber 45 of the evaporator 40 with the cooling coil 41 is connected. Supplied to the heating chamber 95, contacting the cooling chamber 91, using a supply connection 71 is outside air or another cooling agent whose flow in the outside circulation, between the supply connection 71 supplying outside air or another cooling agent connected with a supply connection pipe 96 and an outlet connection 72 taking off outside air or another cooling agent connected with an outside connection pipe 97, is forced using an additional fan 73. The next difference is an automatic adjustment of the flow of outside air or another cooling agent, thus the cooling intensity of the heat pump, through the adjustment of the speed of a driving motor 106 of the additional fan 73. The operation of the driving motor 106 is controlled by a power supply-control system 105 to which signals about the temperature of the heating agent are transmitted by a temperature sensor 107. An analogous solution may apply to the control of the pump and the flow of another cooling agent and the position of the heat exchanger in the embodiments presented in Fig. 1 and Fig. 3, as described below.

In the systems without the automatic adjustment of the cooling intensity of the heat pump the flow of the cooling agent through the heating chamber is constant and the motor driving the additional fan and the pump operates with a constant speed. This speed should be not lower than that at which the overheating of the heat pump follows at the longest operation cycle of the dryer operating at the highest permissible temperatures since at higher speeds of the additional fan or pump a more intensive cooling of the heat pump occurs.

Fig. 3 schematically shows a dryer 201 with the circulation 60 of the drying medium for drying wet objects or articles 15 with the additional heat exchanger 20 whose cooling duct and heating duct are located in flow lines connected to the evaporator 40 of the heat pump 30, and with a heat exchanger 89 located in a flow line 266 and cooling the drying medium with outside air or another cooling agent using a supply connection 78. The circulation of the cooling medium, in this solution, water or gas, between the supply connection 78 of the cooling agent from the outside and an outlet connection 77 of the cooling agent is forced using an additional pump 79. In the embodiment shown in Fig. 3, the fan 70 is connected with the drying chamber 11 using the second section of the duct or the supply flow line 62 of the circulation 60 of the drying medium. Connected with the drying chamber 11 using the third section of the duct or the outlet flow line 63 of the circulation 60 of the drying medium is an inlet 22 of a cooling chamber 21 of the preliminary cooling circulation of the wet drying medium flowing through the additional heat exchanger 20. The cooling chamber 21 of the preliminary cooling circulation of the wet drying agent has an outlet 23 with which the supply connection pipe 46 of the chamber 45 of the evaporator 40, comprising the cooling coil 41, using a fourth section of the duct or a flow line 264, which makes part of the circulation 60 of the drying medium, is connected. The chamber 45 of the evaporator 40 has the outlet connection pipe 47 with which, using a fifth section of the duct or a flow line 265, an inlet 26 of a heating chamber 25 of the preliminary heating circulation of the dried drying medium flowing through the additional heat exchanger 20 is connected. Besides, the chamber 45 of the evaporator 40 has a valve 49 allowing to take off water collecting in the chamber 45 of the evaporator 40 and dropped it out from the stream of a hot wet drying agent.

The heat exchanger 20 of the dryer 201 of the embodiment, presented in Fig. 3, is a counterflow recuperator whose ducts of the drying agent are positioned in parallel at least over specific sections whereby the stream of the hot wet drying medium is directed in the opposite direction to a flow of a stream of a cool dried drying medium. The duct or ducts of the hot wet drying medium creates the cooling chamber 21 of the preliminary cooling circulation of the drying agent flowing through the heat exchanger 20, and the duct or ducts of the cool dried drying medium creates the heating chamber 25 of the preliminary heating circulation of the dried drying medium flowing through the heat exchanger 20. The cooling chamber 21 and the heating chamber 25 of the heat exchanger 20 have a common wall or common walls creating a partition 28 owing to which there occurs a heat exchange between the stream of the hot wet drying medium and the stream of the cool dried drying medium. The size of the partition 28 can be adjusted not only through its length but also through the number of walls between cooling chambers and heating chambers positioned alternately in the housing. In addition, the heat exchanger 20 has a valve 29 allowing to take off water collecting in the cooling chamber 21 after condensation of steam of the stream of the hot wet drying medium.

The heat pump 30 with the circulation 31 of the working agent is constructed like in the two previous embodiments and beside the evaporator 40, comprises the condenser 50 having the heating coil 51 and the chamber 55 of the condenser with the inlet 56 and the outlet 57 of the drying medium. Connected with the inlet 56 of the chamber 55 of the condenser 50, using a next section of the duct or a final flow line 266 in which the previously mentioned additional heat exchanger 89 is located, is an inlet 27 of the heating chamber 25 of the preliminary heating circulation of the dried drying agent flowing through the additional heat exchanger 20. Heat collected from the working agent present in the heating coil 51 of the condenser 50 is transmitted to the drying agent present in the chamber 55 of the condenser 50 which, through the outlet 57 and the first section or the flow line 61, as the dried and heated drying medium, is supplied to the fan 70 forcing the flow of the drying medium like in the previously presented examples.

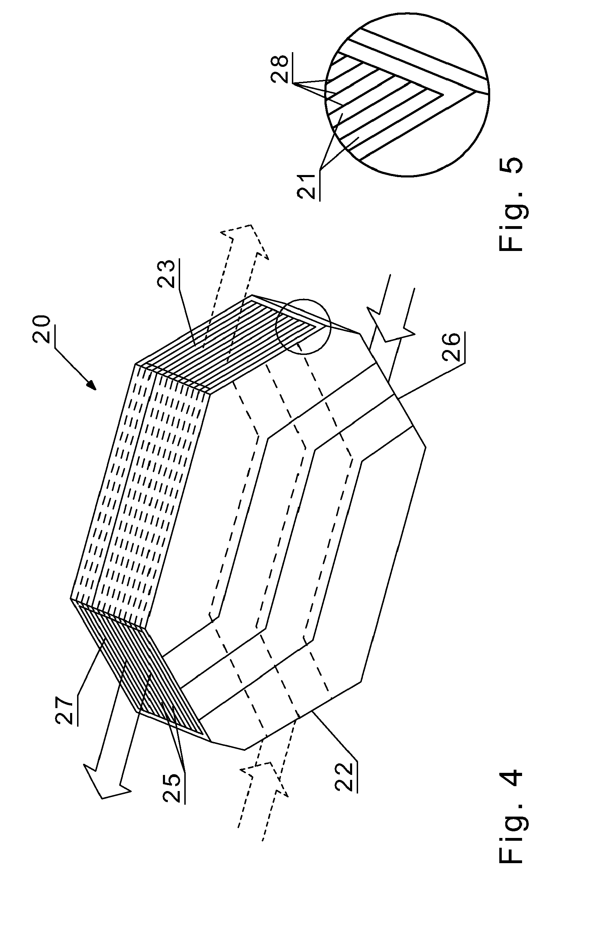

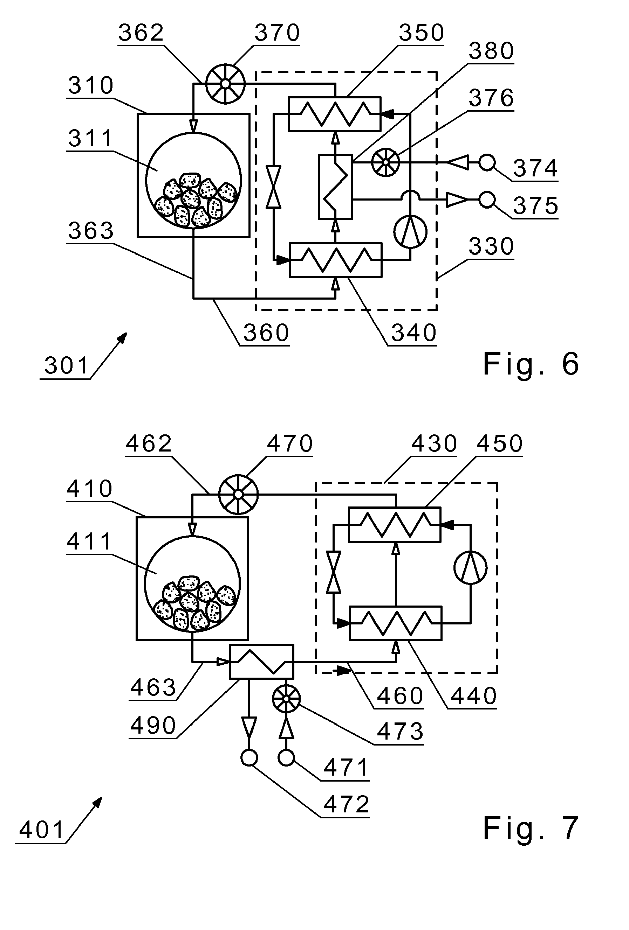

Figs. 4 and 5 show an embodiment of the heat exchanger 20 that is a counterflow recuperator with ducts of the drying medium of the cooling chamber 21 and the heating chamber 25 positioned in parallel at least over specific sections. In this heat exchanger the stream of the hot wet drying medium is directed in the opposite direction to the stream of the cool dried drying medium. The cooling chamber 21 with the inlet 22 and the outlet 23 and the heating chamber 25 with the inlet 26 and the outlet 27 of the heat exchanger 20 have common walls creating the partition 28 owing to which the heat exchange occurs between the stream of the hot wet drying medium and the stream of the cool dried drying medium. While increasing the number of cooling chambers and heating chambers, located alternately in the housing, the intensity of the thermal energy exchange between the stream of the hot wet drying medium and the stream of the cool dried drying medium can be increased. A dryer 301 shown in Fig. 6 with a rotatable drying chamber 311 located in a housing 310 that can be intended for the drying of clothes, fruits, vegetables, farm products, in a first embodiment according to the invention, comprises a heat pump 330 having a condenser 350 and an evaporator 340 and a closed circulation or an incompletely closed circulation 360 of the drying medium, for example a process air. The closed circulation or the incompletely closed circulation 360 of the drying medium is created together by the drying chamber 311 connected with a duct 362 of the dry drying medium with the condenser 350 of the heat pump 330 and with a duct 363 of the wet drying medium with the evaporator 340 of the heat pump 330, a fan 370 forcing the circulation of the drying medium, as well as a heat exchanger 380 cooling the drying medium with outside air having an inlet of the drying medium connected with an outlet of the drying medium of the evaporator 340 of the heat pump 330 and an outlet of the drying medium connected with an inlet of the drying medium of the condenser 350 of the heat pump 330. The heat exchanger 380 connected with a fan 376 forcing the movement of outside air in its flow of outside air, between an inlet supply connection 374 of outside air and an outlet connection 375 of outside air. The fan 370 is built into the duct 362 of the dry drying medium of the closed circulation 360 of the drying medium. The fan 376 is built-in on the inlet of outside air to the heat exchanger 380 cooling the drying medium with outside air. Principally, in dryers for clothes and washers-dryers designed for household use the drying chamber 311 constitutes the drum for clothes. Embedding or built in the fan 370 into the duct 362 of the dry drying medium constitutes one of the possible, advantageous places of its location in the circulation system of the drying medium. The fan can also be, for instance, built into the duct 363 of the wet drying agent, likewise the fan 376 it can be located on the outlet from the heat exchanger 380.

A dryer 401 with a rotatable drying chamber 411 located in a housing 410 shown in Fig. 7, in another embodiment according to the invention, is constructed out of a heat pump 430 comprising a condenser 450 and an evaporator 440 as well as a closed circulation 460 of the drying medium. The closed circulation 460 of the drying medium is created together by the drying chamber 411 connected with a duct 462 of the dry drying medium with the condenser 450 of the heat pump 430 and with a duct 463 of the wet drying medium with the evaporator 440 of the heat pump 430, a fan 470 forcing the circulation of the drying medium, as well as a heat exchanger 490 cooling the drying medium with outside air built into the duct 463 of the wet drying medium of the closed circulation 460 of the drying medium. The heat exchanger 490 is connected with a fan 473 forcing the movement of outside air in its flow of outside air, between an inlet supply connection 471 of outside air and an outlet connection 472 of outside air. The fan 470 is built into the duct 462 of the dry drying medium of the closed circulation 460 of the drying agent. The fan 473 is built in on the inlet 471 of outside air to the heat exchanger 490 cooling the drying medium using the outside air. In the embodiments shown in Figs. 1, 2, 3 with the closed circulation or the incompletely closed circulation where in the drying process heat pumps are used to dry and heat the drying medium, the drying system energy always increases by the electric energy supplied to the motor of the compressor of the heat pump 30, transformed into the thermal energy in the system. If said system is insulated, then the effect of overheating of the heat pump 30 will appear due to the constant rise in the energy of the whole system. In order to prevent the overheating of the heat pump 30, the drying medium is cooled in the heat exchanger, 80, 89, 90 respectively with the heating chamber 85, 95 to which, via the supply connection, 71, 74, 78 respectively, air or water or another cooling agent is supplied, which cools the drying medium flowing through the cooling chamber, 81, 91 respectively, in which the circulation of outside air or another cooling agent is forced by the additional fan or pump, 73, 76, 79 respectively. Thermal energy taken off using the heat exchanger, 80, 89, 90 respectively, has to be not higher than electric energy supplied to the electric motor lessened by the energy of heat losses on flow lines of the drying agent or on the dryer housing.

A method for protecting heat pump against overheating in the dryer shown in Fig. 6 according to which the drying medium, exemplarily process air, is conducted in the closed or the incompletely closed circulation 360 of the drying medium consists in the dry and heated drying medium being connected via the duct 362 of the drying medium from the condenser 350 of the heat pump 330 to the drying chamber 311, from the drying chamber 311 the moistened drying medium being conducted via the duct 363 of the wet drying medium to the evaporator 340 of the heat pump 330, from the evaporator 340 of the heat pump 330 the drying medium being conducted to the heat exchanger 380 that cools the drying medium, conducted in its second flow, with outside air, and from the heat exchanger 380 cooling the drying medium with outside air, the drying medium being conducted to the condenser 350 of the heat pump 330. The circulation of the drying medium is forced by the fan 370 built into the duct 362 of the dry drying medium. The flow of outside air in the heat exchanger 380 cooling the drying medium with outside air is forced by the fan 376.

A method for protecting heat pump against overheating in the dryer presented in Fig. 7 in which the drying medium is conducted in the closed circulation 460 of the drying medium consists in the dry and heated drying medium being conducted via the duct 462 of the dry drying medium from the condenser 450 of the heat pump 430 to the drying chamber 411, from the drying chamber 411 the moistened drying medium being conducted through the heat exchanger 490 built into the duct 463 of the drying medium, cooling the drying medium conducted in its second flow with outside air, to the evaporator 440 of the heat pump 430, from the evaporator 440 of the heat pump 430 the drying medium being conducted to the condenser 450 of the heat pump 430. The circulation of the drying medium is forced by the fan 470 built into the duct 462 of the dry drying medium. The flow of outside air in the heat exchanger 490 cooling the drying medium with outside air is forced by the fan 473.

The solution according to the invention has been presented in selected embodiments. However, these examples do not limit the invention. It is obvious that a modification can be made without changing the essence of the solution. The shown execution examples do not use up the full applicability of the solution according to the invention.

## Claims

1. A dryer or drying machine with an incompletely closed circulation or a closed circulation of a drying medium or agent for drying wet objects or articles, comprising a drying chamber with wet articles placed therein, a fan forcing the circulation of the drying agent in the incompletely closed circulation or the closed circulation of the drying agent and a heat pump located in the incompletely closed circulation or the closed circulation of the drying agent and comprising an evaporator and a condenser **characterized in that**, in the incompletely closed circulation or the closed circulation of the drying agent there is a heat exchanger (80, 89, 90) with a heating chamber (85, 95) to which, via supply connections (71, 74, 78), air from the outside or another drying agent is supplied, cooling down the drying agent flowing through a cooling chamber (81, 91) of the heat exchanger (80, 89, 90) in which the circulation of outside air or another cooling agent is forced by an additional fan or pump (73, 76, 79).

2. The dryer according to claim 1 wherein an inlet connection pipe (82) of the drying agent of the heat exchanger (80) is connected with an outlet (47) of a chamber of an evaporator (40) of a heat pump (30), and an outlet connection pipe (83) of the drying agent of the heat exchanger (80) is connected with an inlet (56) of a chamber of the condenser (50) of the heat pump (30).

3. The dryer according to claim 1 wherein an inlet connection pipe (92) of the drying agent of the heat exchanger (90) is connected with an outlet (13) of a drying chamber (11), and an outlet connection pipe (93) of the drying agent of the heat exchanger (90) is connected with an inlet (46) of the chamber of the evaporator (40) of the heat pump (30).

4. The dryer according to claim 1 wherein in the closed circulation or the incompletely closed circulation there is an additional heat exchanger (20) with a cooling chamber (21) and a heating chamber (25) drawing thermal energy from the cooling chamber (21) whose inlet (22) is connected with the outlet (13) of the drying chamber (11), and an outlet (23) is connected with the supply connection pipe (46) of a chamber (45) of the evaporator (40) of the heat pump (30) whereby the outlet connection pipe (47) of the chamber (45) of the evaporator (40) is connected with the heating chamber (25) of the heat exchanger (20) whose outlet (27) is connected with an inlet connection pipe of the drying agent of the heat exchanger (89), and an outlet connection pipe of the drying agent of the heat exchanger (89) is connected with an inlet (56) of the chamber of the condenser (50) of the heat pump (30).

5. The dryer according to claim 1 or 2 or 3 or 4 wherein the drying chamber is a rotatable drying chamber (311, 411).

6. A method for protecting a heat pump of a dryer or a drying machine for drying wet objects or articles against overheating having a drying chamber, a fan and a heat pump inter-connected by flow lines of a drying medium or agent and creating, with the drying chamber, the fan forcing the circulation of the drying agent and the heat pump, an incompletely closed circulation or a closed circulation of the drying medium whereby an evaporator of the heat pump has a chamber and a condenser of the heat pump has a chamber **characterized in that**, the cooling agent is cooled down in a heat exchanger (80, 89, 90) with a heating chamber (85, 95) to which, via a supply connection (71, 74, 78), air or another cooling agent is supplied which cools down the drying medium that flows through a cooling chamber (81, 91) of the heat exchanger (80, 89, 90) and in which circulation of the outside air or the another cooling agent is forced by an additional fan or pump (73, 76, 79).

7. The method according to claim 6 wherein the flow intensity of the cooling agent through the heating chamber (95) is adjusted using a drive motor (106) of the additional fan or pump (73) whose operation is controlled by a power supply-control system (105) to which signals about a heating state of the drying medium are transmitted from a temperature sensor (107).

8. The method according to claim 6 wherein the flow of the cooling agent through the heating chamber (85, 95) is constant and the motor that drives the additional fan or pump (73, 76, 79) operates with a constant speed.

9. The method according to claim 6 or 7 or 8 wherein thermal energy which is taken off using the heat exchanger (80, 89, 90) is not higher than electric energy supplied to an electric motor of a compressor (33) decreased by energy of heat losses to ambient from flow lines of the drying medium and on a housing of the drying machine and the another cooling agent.

10. The method according to claim 6 or 7 or 8 or 9 wherein the drying medium flowing through the cooling chamber (81) of the heat exchanger (80) is supplied to the chamber (45) of the evaporator (40) of the heat pump (30), and is taken off to the chamber (55) of the condenser (50) of the heat pump (30).

11. The method according to claim 6 or 7 or 8 or 9 wherein the drying medium from the drying chamber (11) is supplied to the cooling chamber (91) of the heat exchanger (90), and is taken off to the chamber (45) of the evaporator (40) of the heat pump (30) whereupon, from the chamber (45) of the evaporator (40), the drying medium is directed to the chamber (55) of the condenser (50) of the heat pump (30).

12. The method according to claim 6 or 7 or 8 or 9 wherein the drying medium from the drying chamber (11) is directed to a cooling chamber (21) of an additional heat exchanger (20) wherefrom, after preliminary cooling, the drying medium is directed to the chamber (45) of the evaporator (40), and afterwards to a heating chamber (25) of the additional heat exchanger (20), and, after preliminary heating of the drying medium in the heating chamber (25) drawing thermal energy from the cooling chamber (21), the drying medium is supplied to an inlet connection pipe of the heat exchanger (89), and via an outlet connection pipe of the drying medium of the heat exchanger (89) the drying medium is supplied to an inlet (56) of the chamber of the condenser (50) of the heat pump (30).
